Europäisches Patentamt

European Patent Office

Office européen des brevets

(19)

(11) Veröffentlichungsnummer: **0 189 492**
**B1**

(12)                    **EUROPÄISCHE PATENTSCHRIFT**

(45) Veröffentlichungstag der Patentschrift:
**22.06.88**

(21) Anmeldenummer: **85100818.5**

(22) Anmeldetag: **28.01.85**

(51) Int. Cl.⁴: **G 01 L 9/06**, G 01 L 9/12

(54) **Messwandiereinsatz, Verfahren zu seiner Herstellung und Verwendung für einen Aufnehmer zur Messung mechanischer Grössen.**

(43) Veröffentlichungstag der Anmeldung:
**06.08.86 Patentblatt 86/32**

(45) Bekanntmachung des Hinweises auf die Patenterteilung:
**22.06.88 Patentblatt 88/25**

(84) Benannte Vertragsstaaten:
**AT CH DE FR GB LI**

(56) Entgegenhaltungen:
**EP - A - 0 024 946**
**US - A - 3 654 579**
**US - A - 3 838 379**
**US - A - 4 412 203**
**US - A - 4 454 771**

(73) Patentinhaber: **Kristal Instrumente AG,**
**Eulachstrasse 22, CH-8408 Winterthur (CH)**

(72) Erfinder: **Sonderegger, Hans-Conrad, Dipl.-Ing.,**
**Sonnhaldenstrasse 7, CH-8413 Neftenbach (CH)**
Erfinder: **Calderara, Reto, Dipl. Chem.,**
**Schaffhauserstrasse 51, CH-8400 Winterthur (CH)**
Erfinder: **Wenger, Alfred, Dr. Phys., Wieshofstrasse 58,**
**CH-8408 Winterthur (CH)**
Erfinder: **Baumgartner, Hans-Ulrich, Dr. Phys.,**
**Landenbergstrasse 45, CH-8404 Winterthur (CH)**

(74) Vertreter: **Schmidt, Horst, Dr. et al, Patentanwälte**
**Pohlmann & Schmidt Siegfriedstrasse 8,**
**D-8000 München 40 (DE)**

ACTORUM AG

# Beschreibung

Die Erfindung betrifft einen Messwandlereinsatz, bestehend aus einem Halbleiterkörper mit einer Kondensatorplatten oder eindiffundierte Widerstandspfade aufweisenden Messmembranpartie und Anschlusskontakten ausserhalb der Messmembranpartie und einem Basiskörper aus isolierendem Material, auf dem der Halbleiterkörper aufgebracht ist, wobei der Basiskörper von Kanälen mit elektrisch leitenden Schichten durchsetzt ist, welche sich zur Abführung der Messsignale bis nahe den Anschlusskontakten des Halbleiterkörpers erstrecken. Die Erfindung betrifft ferner ein Verfahren zum Herstellen des Messwandlereinsatzes und einen Aufnehmer zur Messung mechanischer Grössen unter Verwendung des Messwandlereinsatzes.

Die Erfindung bezieht sich allgemein auf elektromechanische Wandler, bei denen sich eine von aussen eingeleitete Kraft in einer Widerstands- oder Kapazitätsänderung unter Abgabe eines entsprechenden elektrischen Signals äussert. Für derartige Wandler steht an der Messstelle im allgemeinen wenig Platz zur Verfügung, weshalb man heute mit Vorliebe Halbleiteraufnehmer verwendet, die sich durch kleine Abmessungen und grosse Empfindlichkeit auszeichnen. Solche Aufnehmer können an ihrem Einsatzort schwierigen Umweltbedingungen ausgesetzt sein wie sehr hohen oder tiefen Temperaturen, starken Temperaturschwankungen, hoher Feuchtigkeit, aggressiven Medien, starker auch radioaktiver Strahlung sowie magnetischen und elektrischen Feldern.

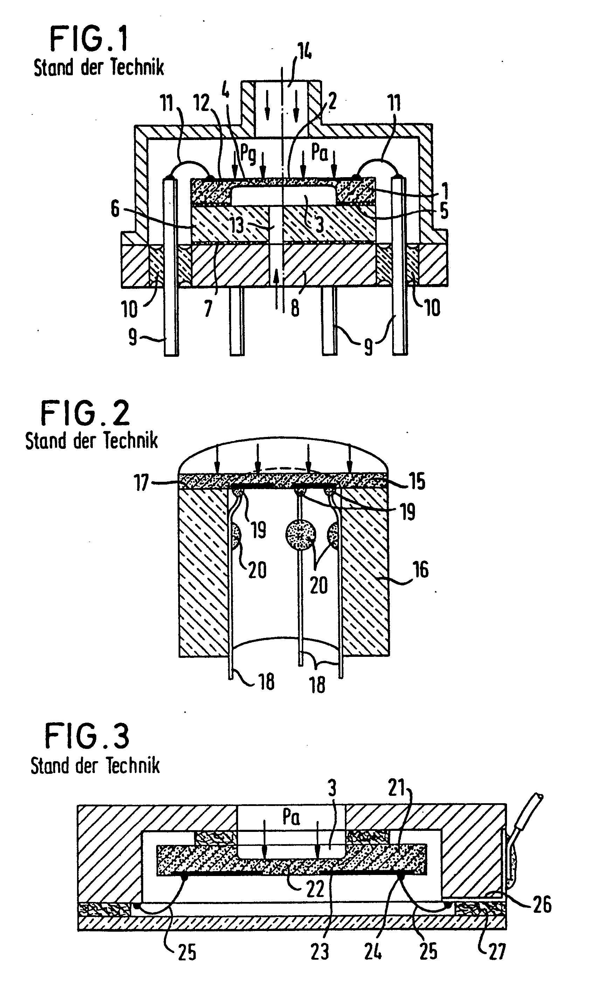

Besondere Schwierigkeiten bereiten Schwingungen und Stossbeanspruchungen. Die in der Halbleitertechnik im allgemeinen verwendeten Ball-Bond- und Wedge-Bond-Techniken unter Vorsehen feiner Golddrähte (vgl. z.B. US-A-4 454 771 und 4 412 203) sind störanfällig, da sie die Schwingungs- und Stossbewegungen mitmachen, was zu vorzeitigem Versagen durch Ermüdungsbrüche und/oder Abreissen der Verbindungen führen kann. Im übrigen wird auf Fig. 1 bis 3 und die zugehörige Beschreibung verwiesen. In Anbetracht dieser Nachteile wurden ferner drahtlose Verbindungen zu den Anschlusskontakten des Halbleiterkörpers vorgeschlagen. Eine derartige Verbindung (EP-A-0 024 946) umfasst mit elektrisch leitenden Beschichtungen versehene Bohrungen in der dielektrischen Glasplatte eines kapazitiven Wandlerelementes, welche sich bis zu den Anschlusskontakten der Kondensatorelektroden erstrecken und mit diesen in elektrischem Kontakt stehen. Bekannt ist ferner (US-A-3 838 379), einen stabförmigen Signalleiter bei der Montage eines Wandlerelementes gegen einen mit Lötgut versehenen Anschlusskontakt eines Widerstandspfades auf einem Halbleiterkörper zu pressen und die gesamte Anordnung anschliessend auf eine Temperatur, die zu einem Schmelzen des Lötgutes führt, zu erwärmen, um eine Lötverbindung zwischen Leiter und Anschlusskontakt zu erhalten. Nachteile beider bekannten Vorgehensweisen ist, dass das Zustandekommen der Verbindung von aussen nicht gezielt beeinflusst werden kann, so dass die Wirksamkeit und Güte solcher Verbindungen erheblichen Schwankungen unterworfen ist. Erschwerend kommt hinzu, dass die geschaffene Verbindung praktisch nicht nachträglich überprüft werden kann. Wenn lediglich leitende Schichten kontaktiert werden, ist unter mechanischen Schwingungen und Stossbeanspruchungen die Betriebssicherheit von auf dieser Verbindungsart beruhenden Wandlerelementen nicht gewährleistet. Nachteilig ist auch die Erhitzung des gesamten Wandlerelementes auf Löttemperatur.

Demgegenüber liegt der Erfindung die Aufgabe zugrunde, einen Messwandlereinsatz der eingangs erwähnten Gattung zu schaffen, der gegenüber Umgebungseinflüssen, insbesondere Schwingungs- und Stossbeanspruchungen, wesentlich störunanfälliger ist und sich mit verringerter Ausstossrate in wirtschaftlicher Weise herstellen lässt.

Diese Aufgabe wird erfindungsgemäss dadurch gelöst, dass die elektrisch leitenden Schichten der Kanäle mit den Anschlusskontakten des Halbleiterkörpers durch ein in den Winkelbereich zwischen angrenzenden leitenden Schichten und Anschlusskontakten gezielt eingebrachtes elektrisch leitendes Material miteinander verbunden sind.

Erfindungsgemäss besteht die elektrische Verbindung zwischen den Anschlusskontakten der Kondensatorplatten oder Widerstandspfaden und den elektrisch leitenden Schichten der zugehörigen Bohrungen aus einem in den Winkelbereich angrenzender Kontaktelemente gezielt von aussen eingebrachten elektrisch leitenden Material bzw. «Winkeltropfen», d.h. sie wird in aktiv beeinflussbarer Weise mittels besonderer Einrichtung geschaffen. Dies gewährleistet nicht nur eine hohe Wirksamkeit und Güte der Verbindung, sondern diese kann nachträglich auch ohne weiteres am fertigen Messwandlereinsatz überprüft werden. Die geschaffene elektrische Verbindung zeichnet sich daher durch eine besondere Stabilität bei mechanischen Stoss- und Schwingungsbeanspruchungen aus. Dabei ist es nicht erforderlich, das gesamte Wandlerelement auf eine bestimmte Temperatur zu erhitzen, was sich hinsichtlich anderer Eigenschaften des Messwandlereinsatzes als sehr günstig erweist.

Das Verfahren zur Herstellung eines derartigen Messwandlereinsatzes, bei dem man in einer Basisplatte aus isolierendem Material Kanäle in einer den Anschlusskontakten von Kondensatorplatten bzw. Widerstandspfaden der Membranpartien auf einer Platte aus Halbleitermaterial entsprechenden Anordnung und Vielzahl einbringt, die Kanäle mit einer elektrisch leitenden Beschichtung versieht, die Halbleiterplatte mit der Basisplatte verbindet, so dass jedem Kanal ein Anschlusskontakt zugeordnet ist, und das Laminat aus Basisplatte und Halbleiterplatte in einzelne Messwandlereinsätze aufteilt, zeichnet sich dadurch aus, dass man vor Aufteilung des Laminates in den Winkelbereich zwischen angrenzenden leitenden Schichten und Anschlusskontakten seitens der die Baisplatte durchsetzenden Kanäle eine Menge elektrisch leitenden Materials einbringt, um die leitenden Schichten und Anschlusskontakte miteinander zu verbinden.

Die Verwendung des Messwandlereinsatzes bei einem Aufnehmer ist in Anspruch 18 angegeben.

Zur Verbindung der Anschlusskontakte mit den Schichten kann man in die Kanäle ein Thermokompressions-, z.B. Ultraschallwerkzeug, einführen, Material von elektrisch leitenden Schichten der Kanäle abscheren und das abgescherte Material bis nahe den Anschlusskontakten der Kondensatorplatten bzw. Widerstandspfade pressen, plastifizieren und zur elektrisch leitenden Anhaftung an der Schicht und den Anschlusskontakten bringen. Gemäss einer Alternative kann die Verbindung auch dadurch erhalten werden, dass man die elektrisch leitende Schicht im Bereich nahe den Anschlusskontakten mit einem Lötmaterial versieht und das Lötmaterial mittels eines in die Kanäle eingeführten Lötwerkzeuges zum Schmelzen und Anhaften an den Anschlusskontakten bringt. Eine weitere Alternative sieht vor, dass man in die Kanäle ein Dispenserwerkzeug für einen elektrisch leitenden Klebstoff einführt, den Klebstoff auf die benachbarten Bereiche von Anschlusskontakten und elektrisch leitender Schicht aufträgt und aushärten lässt. In besonders wirtschaftlicher Weise lässt sich dabei eine Vielzahl von Verbindungen zwischen den elektrisch leitenden Schichten und Anschlusskontakten mittels in die Kanäle der Basisplatte einführbaren Mehrfachwerkzeugen in einem Arbeitsgang herstellen.

Die Erfindung wird nachfolgend anhand der Zeichnung unter vorhergehender Bezugnahme auf den Stand der Technik näher erläutert. Es zeigen:

Fig. 1 bis 3 verschiedene bekannte Bauarten von Halbleiter-Messwandlereinsätzen,

Fig. 4 eine auseinandergezogene geschnittene perspektivische Ansicht eines erfindungsgemäss aufgebauten Messwandlereinsatzes,

Fig. 5 den Messwandlereinsatz nach Fig. 4 in geschnittener Ansicht,

Fig. 6 eine Draufsicht auf den Basiskörper des Messwandlereinsatzes nach Fig. 4 und 5,

Fig. 7 eine Unteransicht auf den Halbleiterkörper des Messwandlereinsatzes nach Fig. 4 und 5,

Fig. 8 und 9 Detailansichten eines modifizierten Messwandlereinsatzes nach der Erfindung zur Erläuterung unterschiedlicher Verfahren zum Verbinden der Anschlusskontakte der Kondensatorplatten bzw. Widerstandspfade mit den elektrisch leitenden Schichten der Kanäle,

Fig. 10 eine Detailansicht des Basiskörpers zur Erläuterung des Verfahrens zum Einbringen der Ausnehmungen in die Messwandlereinsätze,

Fig. 11 und 12 eine Basisplatte in fragmentarischer Drauf- und geschnittener Seitenansicht zur Erläuterung des Verfahrens zur gleichzeitigen Herstellung einer Vielzahl von Messwandlereinsätzen nach der Erfindung,

Fig. 13 eine geschnittene Ansicht eines Messwandlereinsatzes nach der Erfindung zum Einbau in einen Aufnehmer,

Fig. 14 eine fragmentarische geschnittene Ansicht eines Druckaufnehmers mit einem modifizierten Messwandlereinsatz nach der Erfindung,

Fig. 15 eine weggebrochene Draufsicht auf den in Fig. 14 gezeigten Aufnehmer.

Zum Stand der Technik wird auf Fig. 1 bis 3 hingewiesen. Fig. 1 zeigt eine bekannte, häufig verwendete Bauart eines Halbleiter-Messwandlers. Dieser umfasst einen Halbleiterkörper 1 mit einer Membranpartie 2, die durch Herausarbeiten eines Hohlraumes 3 aus dem Halbleiterkörper gebildet ist und deren dem Hohlraum abgewandte Oberfläche Sensorkomponenten z.B. in Gestalt dehnungsempfindlicher elektrischer Widerstandspfade 4 oder Kondensatorplatten bzw. -elektroden aufweist. Das Herausarbeiten des Hohlraumes 3 erfolgt zumeist mechanisch oder durch Ätzung. Der Halbleiterkörper 1 ist mittels Gold- oder Glaslot 5 auf einem Basiskörper 6 aus isolierendem Material wie Glas aufgelötet. Die ganze aus den Körpern 1 und 6 bestehende Anordnung ist wiederum mittels Gold- oder Glaslot 7 auf einem Gehäuseboden 8 befestigt. Die Widerstandspfade 4 bzw. Kondensatorplatten sind zur Abführung des Messsignals über betreffende Anschlusskontakte oder -flächen 12 mittels Golddrähten 11 mit Leitern 9 verbunden, die mittels Glasisolatoren 10 im Gehäuseboden 8 befestigt sind. Für Relativdruckmessungen kann der Aufnehmer von einer Bohrung 13 zur Zuleitung des Relativ- oder Vergleichsdruckes zum Hohlraum 3 durchsetzt sein. Der eigentliche Messdruck wirkt über eine Zuleitung 14 des Gehäuses auf den Messwandlereinsatz. Ausser den Golddrähten 11 sind die Glasisolatoren 10 sowie die Goldlote 5 und 7 störanfällige Teile. Die Glasisolatoren 10 reissen gerne, während die Lote 5 und 7 oft nicht die für Absolutdruckaufnehmer notwendige Dichtheit aufweisen.

Fig. 2 zeigt eine andere bekannte Bauart eines Halbleiter-Messwandlereinsatzes. Der Halbleiterkörper 15 ist hier eine beidseitig plangeläppte Platte, die mittels einer anodischen Bindung 17 auf einem rohrförmigen Basiskörper 16 befestigt ist. Die anodische Bindung 17 ist perfekt dicht, besitzt grosse Festigkeit und eine sehr gute Masshaltigkeit, da keine Bindungszwischenschicht vorliegt und das Material selbst durch Ionenwanderung eine Verbindung herstellt. Durch Verwendung eines Rohres kann der Herausarbeiten eines Hohlraumes umgangen werden. Die Messsignale werden mittels Drähten 18 abgeleitet, die zwar dicker und weniger zerbrechlich als die Golddrähte der vorerwähnten bekannten Ausführung sind, jedoch fertigungstechnische Schwierigkeiten bereiten und mit Klebungen 20 befestigt werden müssen.

Fig. 3 zeigt eine dritte bekannte Messwandlerbauart. Bei der Ausführung nach Fig. 1 hat das Druckmedium direkten Zutritt zu den Widerstandspfaden 4 des Halbleiterkörpers, was nachteilig ist, weil die Diffusionsschichten sehr dünn sind und Korrosion zur Zerstörung der Widerstandspfade führen kann. Der Halbleiterkörper 21 der Ausführung nach Fig. 3 ist dagegen invertiert, d.h. das Druckmedium wirkt seitens des Hohlraumes 3 auf die Membran 22 und die eindiffundierten Widerstandspfade 23 befinden sich auf der Gegenseite. Die Widerstände kommen daher mit dem Druckmedium nicht in Berührung. Jedoch werden problematische Golddrähte 25 auch hier verwendet und die Durchführungen 26 und die Isolation 27 sind noch schwieriger zu gestalten als bei der Konstruktion nach Fig. 1.

Ein weiterer Nachteil der bekannten Messwandlerbauarten ist, dass die Membran 2 keinen Anschlag im Sinne eines Überlastschutzes besitzt, wie er z.B. in der US-Patentschrift 3 335 381 beschrieben wird.

Solche Durchbiegungsbegrenzungen der Membran stellen eine wichtige Ergänzung von Druckaufnehmern dar, wobei man bislang relativ komplizierte und teure Hilfseinrichtungen vorgesehen hat. Wie im folgenden noch beschrieben wird, kann durch die Erfindung eine Membrandurchbiegungsbegrenzung ohne wesentlichen Mehraufwand erhalten werden.

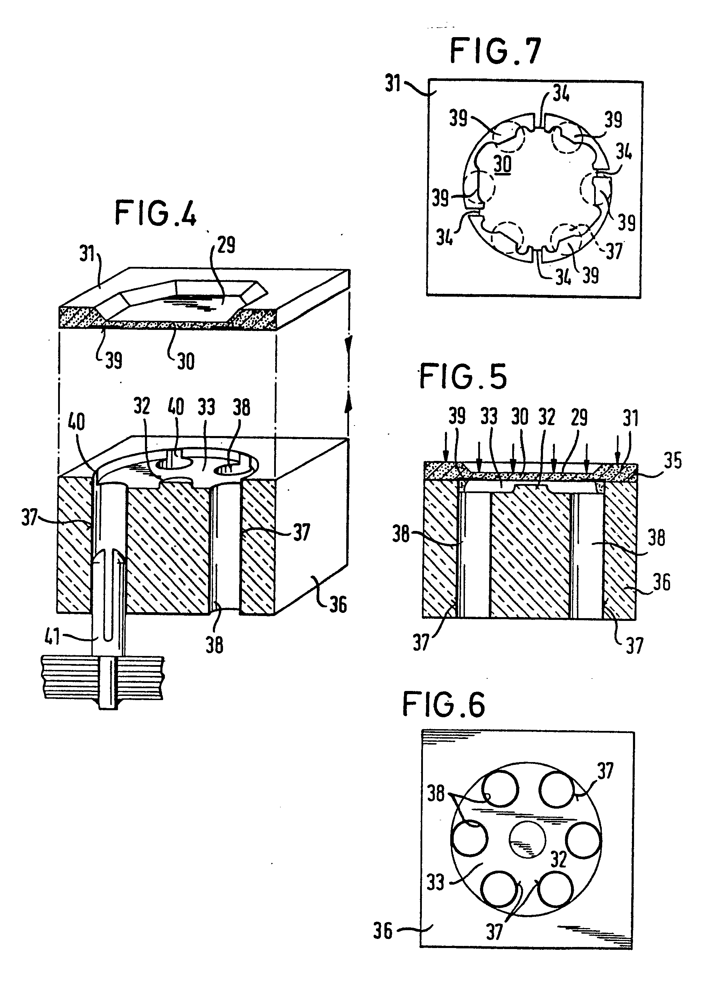

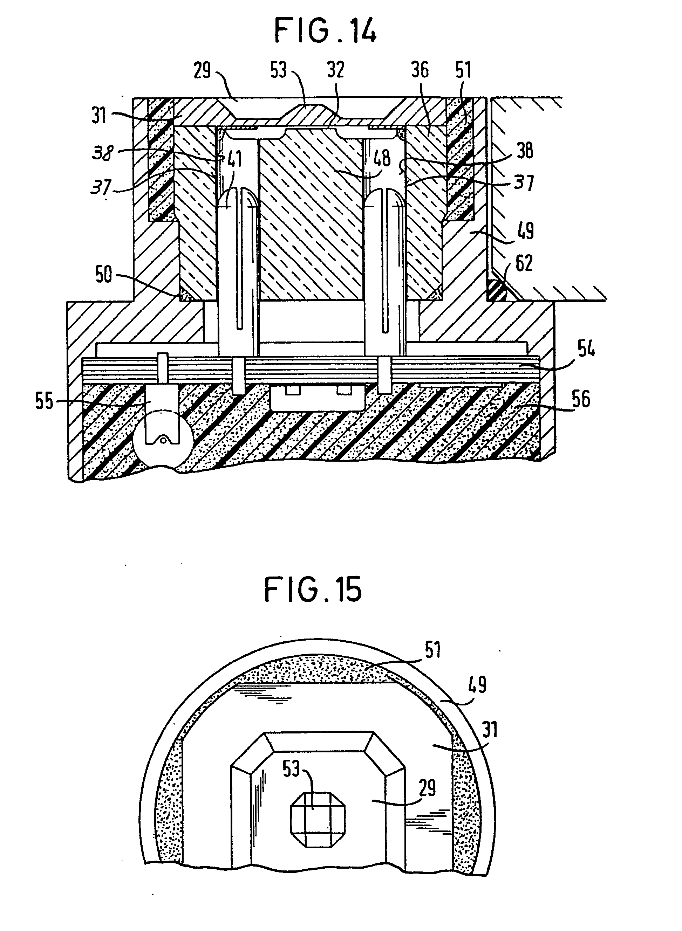

Eine Ausführung eines Messwandlereinsatzes nach der Erfindung ist in Fig. 4 und 5 dargestellt. Es handelt sich hier um einen Messwandlereinsatz für einen Druckaufnehmer. Er könnte jedoch ohne grosse Änderungen auch für einen Kraftaufnehmer oder Beschleunigungsaufnehmer verwendet werden. Der Halbleiterkörper 31 des erfindungsgemässen Messwandlereinsatzes weist an einer Seite eine Einsenkung 29 auf, die eine Messmembranpartie 30 bildet und durch Ätzung oder mechanischen Abtrag herausgearbeitet wurde. Die Einsenkung 29 kann einen viel- z.B. achteckigen Umriss gemäss Fig. 15 haben. Auf der der Einsenkung 29 gegenüberliegenden Seite der Messmembranpartie 30 sind die eindiffundierten Widerstandspfade 34 angebracht. Die Widerstandspfade sind daher dem Druckmedium nicht ausgesetzt. Der Halbleiterkörper 31, der vorzugsweise aus monokristallinem Silizium besteht, ist an einem Basiskörper 36 aus isolierendem Material, wie Glas, mittels einer anodischen Bindung 35 befestigt.

Erfindungsgemäss wird der Basiskörper 36 von z.B. sechs längs eines Kreises angeordneten zylindrischen Kanälen 37 durchsetzt. Der Kreis hat vorzugsweise als Mittelpunkt eine zentrale Erhebung 32 am Basiskörper 36, auf die nachfolgend noch näher eingegangen wird.

Wie aus Fig. 4 ersichtlich, hat der Basiskörper 36 auf der Oberseite eine Ausnehmung 33, an deren Umfang die Kanäle 37 tangential ausmünden. Diese Ausnehmungen 33 verleiht der Messmembranpartie 30 Bewegungsspielraum.

Fig. 6 ist eine Draufsicht auf den Glas- oder Basiskörper 36 mit einer z.B. ringförmigen Ausnehmung 33 und den ausmündenden Kanälen 37. Die Fläche im Zentrum der Ausnehmung bildet einen Anschlag 32, mit dem die Messmembranpartie 30 bei Einwirken eines zu übermässigen Durchbiegungen führenden Messdruckes in Berührung kommt.

Jeder Kanal 37 weist erfindungsgemäss eine elektrisch leitende Schicht 38 auf, die der Ableitung des Messsignals von den Widerstandspfaden 34 dient. Die elektrisch leitenden Schichten 38 führen ganz in der Nähe der Widerstandspfade 34 des Halbleiterkörpers 31. Die Kontaktflächen 39, die gleichzeitig als Verbindungen zu den Widerstandspfaden 34 dienen, befinden sich unmittelbar nahe der in Gestalt von Leitzungen 40 sich längs der Ausnehmung 33 fortsetzenden schmalen Bereichen der Schichten 38.

Fig. 7 zeigt von unten die Halbleiterkörper 31 mit Darstellung der Anordnung der Widerstandspfade 34, Kontaktflächen 39 und gestrichelt angedeuteter Lage und Anordnung der Kanäle 37, welche den Basiskörper 36 durchsetzen. Innerhalb der Ausnehmung 33 dürfen ausser den Leitzungen 40 keine metallisch leitenden Flächen vorliegen.

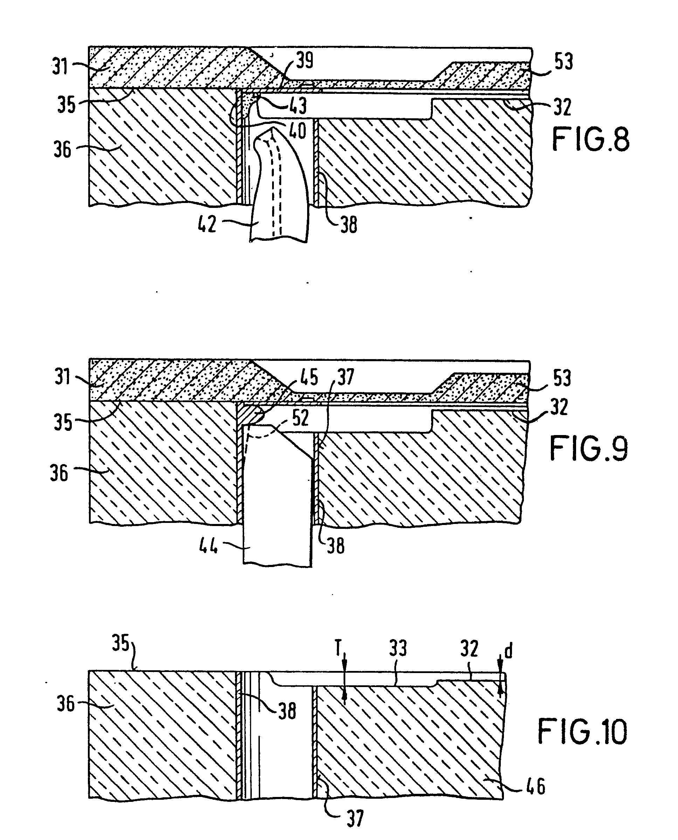

Fig. 8 und 9 zeigen Verfahren zum Verbinden der Leitzungen 40 bzw. Schichten 38 mit den Anschlusskontakten 39 der Widerstandspfade 34.

Nachdem zwischen Halbleiterkörper 31 und Basiskörper 36 eine bevorzugte anodische Bindung 35 hergestellt worden ist, wird gemäss eines bevorzugten Verfahrens nach der Erfindung, dem sog. «Winkeltropfenverfahren», von der Düse eines Dispenserwerkzeuges 42 eine kleine Menge Leitkleber 43 in den im wesentlichen rechten Winkel zwischen Leitzunge 40 und zugehöriger Kontaktfläche 39 gespritzt. Der Kleber härtet nach einiger Zeit aus und schafft die elektrische Verbindung zwischen Leitzunge 40 und Kontaktfläche 39.

Anstelle der vorerwähnten Verbindung kann an besagter Stelle auch eine Löt- oder Thermo-Kompressionsbindung oder eine geeignete andere Verbindung vorgesehen werden. Die Schicht 38 bzw. Leitzunge 40 kann hierzu beispielsweise durch galvanischen Auftrag 52 von Gold, Indium oder Zinn an einem unteren Bereich der Kanäle 37 etwas verstärkt werden. Die ursprüngliche Kontur des galvanischen Auftrages 52 ist in Fig. 9 gestrichelt eingetragen. Mittels eines Ultraschall-Werkzeuges und/oder eines Heizstabes, der die Funktion einer Sonotrode bzw. eines Lötkolbens 44 hat und in die Kanäle 37 eingeschoben werden kann, wird der Auftrag 52 abgeschert und in den Winkel gepresst. Durch Thermokompression des Goldes oder Schmelzung des Lötmaterials wird die Verbindung 45 hergestellt. Es besteht die Möglichkeit, mit einer kleinflächigen, fast punktförmigen Anode und durch Wahl eines kleinen Abstandes zur Schicht 38 bzw. Leitzunge 40 das Metall in einem eng begrenzten Bereich galvanisch aufzutragen.

Durch die erfindungsgemässe Verbindungstechnik werden alle elektrischen Stromwege sehr gut fixiert, so dass Vibrationen ihnen nichts anhaben können. Die eindiffundierten Widerstandspfade 34 liegen auf der dem Druckmedium abgewandten Seite der Messmembranpartie 30 und können daher durch das Druckmedium nicht beeinflusst werden. Im Gegensatz zu der bekannten Wandlerbauart nach Fig. 1 sind ferner keine kritischen temperaturempfindlichen Glasdurchführungen vorhanden und die den Halbleiter- und Basiskörper zusammenhaltenden Lötverbindungen durch weniger kritische anodische Bindungen ersetzt.

Ein wesentlicher weiterer Vorteil der Erfindung ist, dass bei der Fabrikation des Messwandlereinsatzes mehr Arbeitsgänge im sog. Batch-Verfahren durchgeführt werden können als dies bei herkömmlichen Konstruktionen möglich ist. So kann bei der Konstruktion nach Fig. 1 nut der Halbleiterkörper 1 im Batch-Verfahren hergestellt werden. Das heisst das Eindiffundieren der Widerstandspfade 34 und Kontaktflächen und deren Verbindungen, das Einbringen der Hohlräume und das Vorsehen der Schutzabdeckungen aus Siliziumoxid können an vielen Wandlereinheiten in nur einem Arbeitsgang auf einem Wafer mit beispielsweise 76 mm Durchmesser gemeinsam hergestellt werden. Erst nach Erledigung dieser Arbeitsprozesse wird der Wafer in die einzelnen Einheiten aufgetrennt. Die weitere Fertigung der Messwandlereinsätze erfolgt danach in Einzelfertigung, die insbesondere das Bonden, Löten, Evakuieren und Verschliessen umfasst.

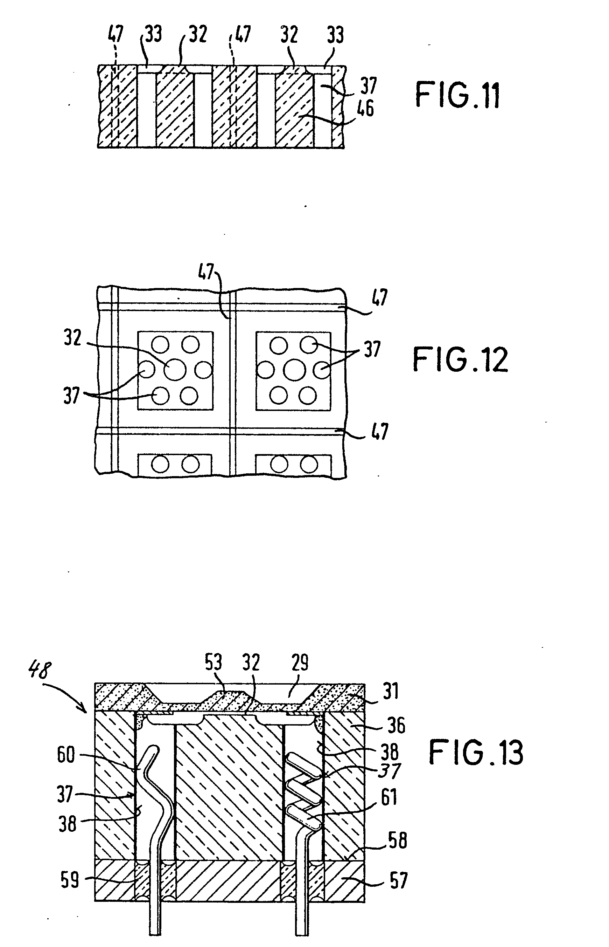

Erfindungsgemäss können dagegen auch die Basiskörper 36 der Messwandlereinsätze im Batch-Verfahren aus einer Basisplatte 46 hergestellt werden, wie dies in Fig. 11 und 12 gezeigt ist. Für z.B. 200 Messwandlereinsätze können in einem Arbeitsprozess durch Ätzung die Ausnehmungen 33 in die Basisplatte 46 eingebracht werden. Ebenfalls durch eine Ätzoperation können die Kanäle 37 für sämtliche Elemente ausgebildet werden. Ebenfalls in einem Arbeitsprozess können alle Kanäle mittels eines chemischen Prozesses zur Schaffung der elektrisch leitenden Schicht 38 innen metallisiert werden.

Zur Bildung der Ausnehmungen 33 mit der zentralen Öffnung 32, die den Anschlag für die Messmembranpartie 30 vorsieht, arbeitet man vorteilhafterweise zweistufig. Ein solches zweistufiges Ätzverfahren kann beispielsweise wie folgt durchgeführt werden:

1. Photolithografische Maskierung aller Bereiche der Basisplatte, welche mit der Halbleiterplatte anodisch zu verbinden sind,
2. erste Ätzstufe auf eine Tiefe d, die der maximal zulässigen Durchbiegung der Messmembranpartie entspricht,
3. photolithografische Maskierung der Anschlagflächen 32,
4. zweite Ätzstufe bis zur vollen Tiefe T der Ausnehmung 33,
5. Entfernung der Ätzmasken.

Da die anodische Bindung zwischen Halbleiterplatte und Basisplatte keiner Zwischenschicht bedarf, hat der Spalt zwischen Messmembranpartie 30 und Anschlag 32 genau den vorgesehenen Abstand d u.zw. über die ganze Fläche der Basisplatte bzw. der Halbleiterplatte 31, 46. Die Gestalt der Basisplatte 46 vor dem anodischen Bonden und vor dem Trennen ist in Fig. 10 ersichtlich.

Schlussendlich wird die so vorbereitete Basisplatte 46 mit dem Halbleiterwafer 31 anodisch verbunden und z.B. mittels einer Multisonotrode, die in alle oder mehrere Kanäle 37 gleichzeitig eingeschoben werden kann, die Thermokompressionsverbindung zwischen den Widerstandspfaden und den Schichten 38 hergestellt. Durch Auftrennen des gebildeten Laminates längs den Linien 47 (s. Fig. 11/12) entstehen funktionsbereite Messwandlereinsätze gemäss Fig. 4, die nur noch in ein Aufnehmergehäuse eingebaut werden brauchen.

Ein möglicher Einbauvorschlag ist in Fig. 14 und 15 gezeigt. Der mit dem Bezugszeichen 48 versehene Messwandlereinsatz ist in einem Aufnehmergehäuse 49 durch eine Einkittung 50 und eine Vergussmasse 51 befestigt und abgedichtet. Damit das Druckmedium nicht durch die Aufnehmereinbauöffnung entweichen kann, ist z.B. ein O-Ring 62 in geeigneter Weise vorgesehen.

Darauf hinzuweisen ist, dass der Halbleiterkörper 31 des Messwandlereinsatzes 48 zusätzlich eine Mittelverstärkung 53 aufweist, die jedoch nicht unbedingt notwendig ist und z.B. in Fig. 4 nicht eingezeichnet ist. Die Mittelverstärkung 53 ergibt eine Steigerung der Empfindlichkeit des Aufnehmers und eine Linearisierung der Kalibrierkurve.

In die Kanäle 37 des Messwandlereinsatzes 48 greifen Kontaktstifte 41 ein, die somit mit den elektrisch leitenden Schichten 38 der Kanäle in Kontakt treten. Die Kontaktstifte 41 stehen von einer Elektronikleiterplatte 54 mit elektronischen Bauteilen 55 ab, die ebenfalls mittels einer Vergussmasse 56 im Aufnehmergehäuse befestigt sind. Die Verbindung zwischen Messwandlereinsatz und Elektronik ist so auf einfachste Weise herzustellen.

Eine andere Ausbildung ist in Fig. 13 dargestellt. Der Messwandlereinsatz 48 ist hier auf der Oberseite einer Platte 57 mittels einer Klebung 58 aufgebracht. Die Platte 57 besitzt isolierende Durchführungen 59 zur Fixierung von Kontaktzungen 60 oder Kontaktspiralen 61, die mit den Schichten 38 der Kanäle 37 in Berührung stehen. Die innen metallisierten Kanäle 37 erlauben auch andere Kontaktierungen, wie z.B. Einlöten oder Einkleben von Drähten, Gewindeanschlüssen usw. Dank der erfindungsgemässen Schichten der Kanäle kann Montagearbeit eingespart werden. Die Kontakte sind ausserdem zuverlässiger, da vibrationsunempfindlicher. Ferner sind die Übergangswiderstände wesentlich kleiner.

Die Erfindung wurde vorausgehend anhand bevorzugter Ausführungsformen beschrieben. Es versteht sich jedoch, dass sie hierauf nicht beschränkt ist, sondern auch, im Rahmen der Patentansprüche, solche Modifikationen einbezogen sind, die sich dem Fachmann anhand der gegebenen Lehre anbieten. So umfasst das beschriebene sog. Winkeltropfenverfahren ausser Kleben, Löten, Thermokompression auch andere nicht ausdrücklich genannte Verbindungstechniken, wie z.B. Schweissen, mit gleichen oder ähnlichen Wirkungen.

**Patentansprüche**

1. Messwandlereinsatz, bestehend aus einem Halbleiterkörper (31) mit einer Kondensatorplatten oder eindiffundierte Widerstandspfade (34) aufweisenden Messmembranpartie (30) und Anschlusskontakten (39) ausserhalb der Messmembranpartie (30) und einem Basiskörper (36) aus isolierendem Material, auf dem der Halbleiterkörper (31) aufgebracht ist, wobei der Basiskörper (36) von Kanälen (37) mit elektrisch leitenden Schichten (38) durchsetzt ist, welche sich zur Abführung der Messsignale bis nahe den Anschlusskontakten (39) des Halbleiterkörpers (31) erstrecken, dadurch gekennzeichnet, dass die elektrisch leitenden Schichten (38) der Kanäle (37) mit den Anschlusskontakten (39) des Halbleiterkörpers (31) durch ein in den Winkelbereich zwischen angrenzenden leitenden Schichten und Anschlusskontakten gezielt eingebrachtes elektrisch leitendes Material (43, 45) verbunden sind.

2. Messwandlereinsatz nach Anspruch 1, dadurch gekennzeichnet, dass eine den Anschlusskontakten (39) entsprechende Vielzahl von Kanälen (37) mit im wesentlichen senkrecht zur Verbindungsebene zwischen Halbleiterkörper (31) und Basiskörper (36) sich erstreckenden Achsen vorgesehen ist.

3. Messwandlereinsatz nach Anspruch 1 oder 2, dadurch gekennzeichnet, dass die elektrisch leitende Schicht (38) jedes Kanals (37) wenigstens nahe dem betreffenden Anschlusskontakt (39) unter einem im wesentlichen rechten Winkel zu diesem steht.

4. Messwandlereinsatz nach einem der vorhergehenden Ansprüche, dadurch gekennzeichnet, dass unterhalb der Messmembranpartie (30) im Basiskörper (36) eine Ausnehmung (33) vorgesehen ist, und dass sich die elektrisch leitenden Schichten (38) in Form von Leitzungen (40) längs der Ausnehmung zu den Anschlusskontakten (39) erstrecken.

5. Messwandlereinsatz nach Anspruch 4, dadurch gekennzeichnet, dass die Ausnehmung (33) eine zentrale Erhöhung (32) hat, mit der die Messmembranpartie (30) bei Überschreiten einer bestimmten Durchbiegung in Eingriff bringbar ist.

6. Messwandlereinsatz nach einem der vorhergehenden Ansprüche, dadurch gekennzeichnet, dass die Messmembranpartie (30) einen zentralen Bereich (53) mit vergrösserter Dicke hat.

7. Messwandlereinsatz nach einem der vorhergehenden Ansprüche, dadurch gekennzeichnet, dass die Messmembranpartie (30) durch eine Einsenkung (29) im Halbleiterkörper (31) an der den Kondensatorplatten bzw. Widerstandspfaden und Anschlusskontakten gegenüberliegenden Seite gebildet ist.

8. Messwandlereinsatz nach einem der vorhergehenden Ansprüche, dadurch gekennzeichnet, dass der Halbleiterkörper (31) aus einem Siliziummaterial und der Basiskörper (36) aus einem Glasmaterial besteht.

9. Messwandlereinsatz nach einem der vorhergehenden Ansprüche, dadurch gekennzeichnet, dass der Halbleiterkörper (31) mit dem Basiskörper (36) anodisch verbunden ist.

10. Verfahren zur Herstellung eines Messwandlereinsatzes nach einem der vorhergehenden Ansprüche, bei dem man in einer Basisplatte (36) aus isolierendem Material Kanäle (37) in einer den Anschlusskontakten (39) von Kondensatorplatten bzw. Widerstandspfaden (34) der Messmembranpartien (30) auf einer Platte (31) aus Halbleitermaterial entsprechenden Anordnung und Vielzahl einbringt, die Kanäle (37) mit einer elektrisch leitenden Schicht (38) versieht, die Halbleiterplatte (31) mit der Basisplatte (36) verbindet, so dass jedem Kanal (37) ein Anschlusskontakt (39) zugeordnet ist, und das Laminat aus Basisplatte (36) und Halbleiterplatte (31) in einzelne Messwandlereinsätze aufteilt, dadurch gekennzeichnet, dass man vor Aufteilung des Laminates in den Winkelbereich zwischen angrenzenden leitenden Schichten (38) und Anschlusskontakten (39) seitens der die Basisplatte (36) durchsetzenden Kanäle (37) eine Menge elektrisch leitenden Materials einbringt, um die leitenden Schichten (38) und Anschlusskontakte (39) miteinander zu verbinden.

11. Verfahren nach Anspruch 10, dadurch gekennzeichnet, dass in der Basisplatte Ausnehmungen in einer Vielzahl und Anordnung entsprechend den Membranpartien der Halbleiterplatte eingebracht werden, bevor die Platten miteinander verbunden werden.

12. Verfahren nach Anspruch 11, dadurch gekennzeichnet, dass man die Ausnehmungen in einer ersten Stufe nur bis zu einer Tiefe d einbringt und danach längs eines zentralen Bereiches bis zu einer vollen Tiefe T, so dass jede Ausnehmung einen zentralen erhöhten Bereich aufweist.

13. Verfahren nach Anspruch 10, dadurch gekennzeichnet, dass man in Kanäle ein Thermokompressionswerkzeug einführt, Material von der elektrisch leitenden Schicht der Kanäle abschert, das abgescherte Material bis nahe den Anschlusskontakten presst, plastifiziert und zur elektrisch leitenden Anhaftung an der Schicht und den Anschlusskontakten bringt.

14. Verfahren nach Anspruch 13, dadurch gekennzeichnet, dass das abgescherte Material ein auf die elektrisch leitende Schicht im Bereich nahe den Anschlusskontakten aufgebrachter Metallauftrag ist.

15. Verfahren nach Anspruch 10, dadurch gekennzeichnet, dass man die elektrisch leitende Schicht im Bereich nahe den Anschlusskontakten mit einem Lötmaterial versieht und das Lötmaterial mittels eines in die Kanäle eingeführten Lötwerkzeuges zum Schmelzen und Anhaften an den Anschlusskontakten bringt.

16. Verfahren nach Anspruch 10, dadurch gekennzeichnet, dass man in die Kanäle ein Dispenserwerkzeug für einen elektrisch leitenden Klebstoff einführt, den Klebstoff auf die benachbarten Bereiche von Anschlusskontakten und elektrisch leitender Schicht aufträgt und aushärten lässt.

17. Verfahren nach einem der vorhergehenden Ansprüche, dadurch gekennzeichnet, dass man mittels Mehrfachwerkzeugen gleichzeitig eine Vielzahl von Verbindungen zwischen den Schichten und Anschlusskontakten herstellt.

18. Aufnehmer unter Verwendung eines Messwandlereinsatzes nach einem der Ansprüche 1 bis 9, gekennzeichnet durch eine in einem den Messwandlereinsatz aufnehmenden Gehäuse (49) vorgesehene Trägerplatte (54) mit Kontaktelementen (41, 60, 61), die in die elektrisch leitend beschichteten Kanäle des Messwandlereinsatzes einführbar sind.

## Claims

1. A transducer insert comprising a semiconductor body (31) with a measuring diaphragm portion (30) having capacitor plates or diffused-in resistance paths (34) and connecting contacts (39) outside the measuring diaphragm portion (30), and a base body (36) made of an insulating material, to which the semiconductor body (31) is mounted, said base body (36) includes channels (37) passing through said base body (36) and being provided with electrically conductive layers (38) essentially extending to the vicinity of the connecting contacts (39) of the semiconductor body (31), characterized in that said electrically conductive layers (38) of the channels (37) are connected to the connecting contacts (39) of the semiconductor body (31) by means of an electrically conductive material (43, 45) positively applied in the angle region between adjacent conductive layers and connecting contacts.

2. The transducer insert as claimed in claim 1, in which a number of channels (37) corresponding to the number of connecting contacts (39) is provided with the axes thereof extending essentially vertically to the connection plane between the semiconductor body (31) and the base body (36).

3. The transducer insert as claimed in claim 1 or 2, in which at least in vicinity of the associated connecting contact (39) the electrically conductive layer (38) of each channel (37) is essentially at right angle to the connecting contact.

4. The transducer insert as claimed in one of the preceding claims, in which a recess (33) is provided in the base body (36) underneath the measuring diaphragm portion (30), and in which the electrically conductive layers (38) extend in the form of conductive tabs (40) along the recess to the connecting contacts (39).

5. The transducer insert as claimed in claim 4, in which the recess (33) has a central projection (32) with which the measuring diaphragm portion (30) is adapted to come into contact if a certain limit of deflection is exceeded.

6. The transducer insert as claimed in one of the preceding claims, in which the measuring diaphragm portion (30) has a central portion (53) of increased thickness.

7. The transducer insert as claimed in one of the preceding claims, in which the measuring diaphragm portion (30) is formed by a recess (29) in the semiconductor body (31) on the side opposite to the capacitor plates or diffused-in resistance paths and connecting contacts.

8. The transducer insert as claimed in one of the preceding claims, in which the semiconductor body (31) consists of a silicon material and the base body (36) of a glass material.

9. The transducer insert as claimed in one of the preceding claims, in which the semiconductor body (31) is anodically connected to the base body (36).

10. A method for manufacturing a transducer insert according to one of the preceding claims, comprising the steps of incorporating channels (37) in a base plate (36) made of an insulating material in an arrangement and number corresponding to the connecting contacts (39) and capacitor plates or resistance paths of the measuring diaphragm portions (30) of a plate (31) made of a semiconductor material, providing the channels (37) with electrically conductive layers (38), connecting the semiconductor plate (31) to the base plate (36) in such a manner that a connecting contact (39) is associated to each of said channels (37), and dividing the laminate consisting of the base plate (36) and the semiconductor plate (31) into a number of individual transducer inserts, characterized by the step of applying, prior to dividing the laminate, an amount of electrically conductive material in the angle region between adjacent conductive layers (38) and connecting contacts (39) through the channels (37) passing through the base plate (36) for connecting the conductive layers (38) and the connecting contacts (39) to each other.

11. The method as claimed in claim 10, in which recesses in a number and arrangement corresponding to the diaphragm portions of the semiconductor plate are formed in the base plate prior to connecting the plates to each other.

12. The method as claimed in claim 11, in which in a first step the recesses are formed to a depth d and thereafter to a full depth T around a central region whereby a central raised portion is provided in each recess.

13. The method as claimed in claim 10, comprising steps of introducing a thermo-compression tool into the channels, shearing off material from the electrically conductive layers of the channels, pressing the material sheared off into the vicinity of the connecting contacts, and plastifying the sheared off material and causing it to adhere in an electrically conductive manner to the layers and connecting contacts.

14. The method as claimed in claim 13, in which the sheared off material is a metal deposition on the electrically conductive layers near the connecting contacts.

15. The method as claimed in claim 10, comprising the steps of providing a soldering material on the electrically conductive layers near the connecting contacts, and melting the soldering material and causing it to adhere to the connecting contacts by means of a soldering tool introduced into the channels.

16. The method as claimed in claim 10, comprising the steps of introducing into the channels a tool for dispensing an electrically conductive adhesive, applying the adhesive to adjacent portions of the connecting contacts and electrically conductive layers, and allowing the adhesive to set.

17. The method as claimed in one of the preceding claims, in which a number of connections between the electrically conductive layers and the connecting contacts are simultaneously made by means of a multiple tool.

18. A transducer having a transducer insert as claimed in one of the claims 1 to 9, characterized by a housing (49) accommodating the transducer insert and provided with a carrier plate (54) having contact elements (41, 60, 61) adapted to be inserted into the electrically conductively coated channels of the transducer insert.

**Revendications**

1. Elément transducteur constitué d'un corps semi-conducteur (31) comportant une partie membrane de mesure (30), présentant des lames de condensateur ou des voies de résistance (34) diffusées à l'intérieur et des points de connexion (39) à l'extérieur de la partie membrane de mesure (30), et un corps de base (36) en matière isolante, sur lequel est installé le corps semi-conducteur (31), traversé par des canaux (37) comportant des couches électroconductrices (38) s'étendant jusqu'à proximité des points de connexion (39) du corps semi-conducteur (31), en vue de transmettre les signaux de mesure, caractérisé en ce que les couches électroconductrices (38) des canaux (37) sont reliées aux points de connexion (39) du corps semi-conducteur (31) au moyen d'une matière électroconductrice (43, 45) appliquée de manière appropriée dans l'angle formé entre les couches électroconductrices et les points de connexion adjacents.

2. Elément transducteur suivant la revendication 1, caractérisé en ce qu'il est prévu une série de canaux (37) correspondant aux différents points de connexion (39), dont les axes sont substantiellement perpendiculaires au plan de raccordement entre le corps semi-conducteur (31) et le corps de base (36).

3. Elément transducteur suivant la revendication 1 ou 2, caractérisé en ce que la couche électroconductrice (38) de chaque canal (37) se trouve, au moins à proximité du point de connexion (39) correspondant, substantiellement à angle droit par rapport à celui-ci.

4. Elément transducteur suivant une des revendications qui précèdent, caractérisé en ce qu'il est prévu un évidement (33) dans le corps de base (36) sous la partie membrane de mesure (30) et en ce que le long de l'évidement, les couches électroconductrices (38) se prolongent en forme de languettes (40) en direction des points de connexion (39).

5. Elément transducteur suivant la revendication 4, caractérisé en ce que l'évidement (33) présente une élévation centrale (32) contre laquelle la partie membrane de mesure (30) vient appuyer en cas de flexion excessive déterminée de celle-ci.

6. Elément transducteur suivant une des revendications qui précèdent, caractérisé en ce que la partie membrane de mesure (30) présente une zone centrale (53) plus épaisse.

7. Elément transducteur suivant une des revendications qui précèdent, caractérisé en ce que la partie membrane de mesure (30) est formée par un évidement (29) réalisé dans le corps semi-conducteur (31) du côté opposé aux lames de condensateur ou voies de résistance et aux points de connexion.

8. Elément transducteur suivant une des revendications qui précèdent, caractérisé en ce que le corps semi-conducteur (31) est en silicium et le corps de base (36) en verre.

9. Elément transducteur suivant une des revendications qui précèdent, caractérisé en ce que le corps semi-conducteur (31) est fixé sur le corps de base (36) par liaison anodique.

10. Procédé de fabrication d'un élément transducteur suivant une des revendications qui précèdent, consistant à réaliser dans une plaque de base (36) en matière isolante des canaux (37) selon une disposition et un nombre correspondant aux points de connexion (39) de lames de condensateur ou de voies de résistance (34) des parties membranes (30) d'une plaque (31) en matière semi-conductrice, à pourvoir les canaux (37) d'une couche électroconductrice (38), à joindre la plaque semi-conductrice (31) à la plaque de base (36) de manière à ce que chaque canal (37) se trouve associé à un point de connexion (39) et à diviser le lamifié constitué de la plaque de base (36) et de la plaque semi-conductrice (31) en éléments transducteurs individuels, caractérisé en ce qu'il est appliqué par les canaux (37) traversant la plaque de base (36), avant de diviser le lamifié, une quantité de matière électroconductrice dans l'angle formé entre les couches électroconductrices (38) et les points de connexion (39) adjacents, en vue de relier les couches électroconductrices (38) et les points de connexion (39) correspondants.

11. Procédé suivant la revendication 10, caractérisé en ce qu'il est réalisé des évidements dans la plaque de base selon un nombre et une disposition correspondant aux parties membranes de la plaque semi-conductrice (31), avant de relier les plaques entre elles.

12. Procédé suivant la revendication 11, caractérisé en ce que, dans un premier temps, les évidements sont réalisés jusqu'à une profondeur d seulement et ensuite jusqu'à une pleine profondeur T autour d'une zone centrale, de manière à ce que chaque évidement présente une élévation centrale.

13. Procédé suivant la revendication 10, caractérisé en ce qu'un outil à thermocompression est introduit dans les canaux, en ce que de la matière est enlevée de la couche électroconductrice des canaux et ence que la matière enlevée est poussé jusqu'à proximité des points de connexion, est ramollie et y est comprimée de manière à obtenir une adhérence électroconductrice avec la couche et les points de connexion.

14. Procédé suivant la revendication 13, caractérisé en ce que la matière enlevée est une charge de métal appliquée sur la couche électroconductrice dans la région des points de connexion.

15. Procédé suivant la revendication 10, caractérisé en ce qu'il est appliqué de la soudure sur la couche électroconductrice dans la région des points de connexion et en ce que la soudure est portée à fusion au moyen d'un fer à souder introduit dans les canaux, en vue de réaliser l'adhérence avec les points de connexion.

16. Procédé suivant la revendication 10, caractérisé en ce que le bec d'un pistolet distributeur de colle électroconductrice est introduit dans les canaux et en ce que de la colle est appliquée dans les zones proches des points de connexion et de la couche électroconductrice, en vue d'y durcir par la suite.

17. Procédé suivant une des revendications qui précèdent, caractérisé en ce quil est réalisé simultanément une série de raccords entre les couches et les points de connexion, au moyen d'outils multiples.

18. Capteur destiné à être employé avec un élément transducteur suivant une des revendications 1 à 9, caractérisé par une plaque-support (54) prévue dans un corps (49) destiné à recevoir l'élément transducteur et pourvue d'éléments de contact (41, 60, 61), lesquels viennent s'insérer dans les canaux de l'élément transducteur pourvus d'un revêtement électroconducteur.

# FIG.1
Stand der Technik

# FIG.2
Stand der Technik

# FIG.3
Stand der Technik

FIG.7

FIG.4

FIG.5

FIG.6

31 39 53
35 43 32
36 40
42 38

**FIG.8**

31 45 37 53
35 52 32
36
44 38

**FIG.9**

35 T 33 32 d
36 38
37 46

**FIG.10**

FIG.11

FIG.12

FIG.13

# FIG. 14

# FIG. 15